(19) **Europäisches Patentamt European Patent Office Office européen des brevets**

(11) **EP 3 663 631 B1**

(12) **EUROPEAN PATENT SPECIFICATION**

(45) Date of publication and mention of the grant of the patent:
**11.10.2023 Bulletin 2023/41**

(51) International Patent Classification (IPC):
**F17C 1/00** *(2006.01)*    **B65D 21/02** *(2006.01)*
**F17C 11/00** *(2006.01)*    **F17C 13/02** *(2006.01)*

(21) Application number: **18841081.5**

(22) Date of filing: **31.07.2018**

(52) Cooperative Patent Classification (CPC):
**F17C 1/00; B65D 21/02; F17C 11/00;**
F17C 2201/0119; F17C 2201/0157;
F17C 2201/058; F17C 2203/0619;
F17C 2203/0629; F17C 2203/0636;
F17C 2203/0646; F17C 2203/0648;
F17C 2203/0663; F17C 2205/0107;
F17C 2205/0111; F17C 2205/0165;    (Cont.)

(86) International application number:
**PCT/JP2018/028550**

(87) International publication number:
**WO 2019/026872 (07.02.2019 Gazette 2019/06)**

(54) **GAS STORAGE CONTAINER**

GASLAGERUNGSBEHÄLTER

RÉCIPIENTS DE STOCKAGE DE GAZ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.07.2017 JP 2017147901**

(43) Date of publication of application:
**10.06.2020 Bulletin 2020/24**

(73) Proprietor: **Atomis Inc.**
**Kobe-shi, Hyogo 650-0047 (JP)**

(72) Inventors:
• **ASARI, Daisuke**
**Kyoto-shi**
**Kyoto 602-0841 (JP)**
• **HIGUCHI, Masakazu**
**Kyoto-shi**
**Kyoto 602-0841 (JP)**
• **KATO, Shinji**
**Kyoto-shi**
**Kyoto 602-0841 (JP)**
• **NOGUCHI, Yukiko**
**Kyoto-shi**
**Kyoto 602-0841 (JP)**

(74) Representative: **AOMB Polska Sp. z.o.o.**
**ul. Rondo Ignacego Daszynskiego 1**
**00-843 Warsaw (PL)**

(56) References cited:
EP-A2- 0 353 387    DE-C1- 4 311 208
FR-A- 840 273    GB-A- 2 541 752
JP-A- 2001 241 599    JP-A- 2001 280 589
JP-A- 2005 075 561    JP-A- 2007 315 608
JP-A- 2011 098 736    US-A- 5 697 221
US-A1- 2006 051 638    US-A1- 2009 283 176
US-A1- 2014 026 991    US-A1- 2016 104 907
US-A1- 2016 185 210    US-B1- 6 976 594

EP 3 663 631 B1

(52) Cooperative Patent Classification (CPC): (Cont.)
F17C 2205/0169; F17C 2205/03; F17C 2221/011;
F17C 2221/012; F17C 2221/013; F17C 2221/014;
F17C 2221/031; F17C 2221/033; F17C 2225/0123;
F17C 2225/035; F17C 2225/036; F17C 2250/032;
F17C 2250/034; F17C 2250/043; F17C 2250/0439;
F17C 2250/0478; F17C 2260/018; Y02E 60/32

**Description**

**TECHNICAL FIELD**

The present invention relates to a gas storage container having a specific shape.

**BACKGROUND ART**

Gas cylinders having a large weight and a bottle shape have been generally used. However, such gas cylinders are not easy to handle as they have large occupied volume and are difficult to transport and install. Also, such gas cylinders are not meant to have aesthetic appearances.

Citation List

Patent Literature

[Patent Literature 1] Japanese Unexamined Patent Application Publication No. 2015-178906
Document US2006051638A1 discloses a device for storing gas-hydrogen, and teaches of using additional material having a high surface area, such as metal-organic-frameworks, and presenting use of multiple vertically stackable modules. US 2009/283176 A1 relates to cryogenic-capable high pressure containers for compact flexible storage of hydrogen onboard vehicles.

**SUMMARY OF THE INVENTION**

Technical Problem

An object of the present invention is to provide a gas storage container that are easy to transport and install.

Solution to Problem

Some aspects of the present invention are as described below.
The object of the present invention is a gas storage container comprising a flat upper surface and a flat lower surface, and being vertically stackable, further comprising a porous material therein, characterized in that:
the gas storage container comprises:

a casing with the flat upper surface and the flat lower surface which are vertically stackable;
a gas container installed in the casing and comprising the porous material therein; and
a gas remaining amount measurement module installed in a space between the casing and the gas container.

Advantageous Effects of Invention

According to the present invention, it becomes possible to provide a gas storage container that is easy to transport and install.

**BRIEF DESCRIPTION OF DRAWINGS**

FIG. 1 is a perspective view showing a gas storage container according to an embodiment of the present invention.

FIG. 2 is a cross-sectional view of the gas storage container shown in FIG. 1.

FIG. 3 is a perspective view illustrating a state in which a plurality of the gas storage containers according to an embodiment of the present invention are vertically stacked.

FIG. 4 is a conceptual diagram illustrating an example of a configuration of a gas remaining amount measurement module.

FIG. 5 is a perspective view showing a gas storage container according to another embodiment of the present invention.

FIG. 6 is a perspective view showing a gas storage container according to another embodiment of the present invention.

FIG. 7 is a perspective view showing a gas storage container according to another embodiment of the present invention.

FIG. 8 is a perspective view showing a gas storage container according to another embodiment of the present invention.

FIG. 9 is a perspective view showing a gas storage container according to another embodiment of the present invention.

FIG. 10 is a perspective view showing a gas storage container according to another embodiment of the present invention.

FIG. 11 is a perspective view showing a gas storage container according to another embodiment of the present invention.

FIG. 12 is a perspective view showing a gas storage container according to another embodiment of the present invention.

FIG. 13 is a cross-sectional view of the gas storage container shown in FIG. 12.

FIG. 14 is a perspective view showing a gas storage container according to another embodiment of the present invention.

FIG. 15 is a cross-sectional view of the gas storage container shown in FIG. 14.

FIG. 16 is a perspective view showing a gas storage container according to another embodiment of the present invention.

FIG. 17 is a graph showing an example of a gas storage amount.

FIG. 18 is a graph showing an example of a gas storage amount.

FIG. 19 is a graph showing an example of a gas storage amount.

FIG. 20 is a graph showing an example of a gas storage amount.

## DESCRIPTION OF EMBODIMENTS

The gas storage container according to the present invention has flat upper and lower surfaces and can be stacked vertically. Adopting such a configuration makes it possible to easily and effectively transport and install the gas storage container. Examples of such gas storage containers will be described below.

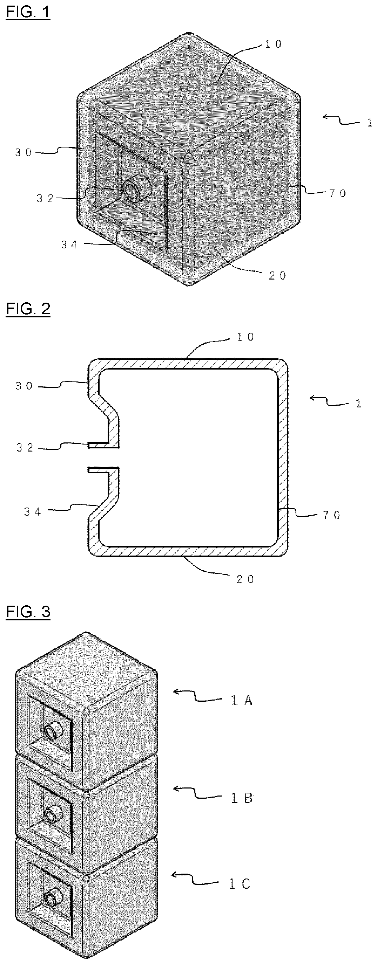

FIG. 1 is a perspective view showing a gas storage container according to an embodiment of the present invention. FIG. 2 is a cross-sectional view of the gas storage container shown in FIG. 1. FIG. 3 is a perspective view illustrating a state in which a plurality of the gas storage containers according to an embodiment of the present invention are stacked one above the other.

The gas storage container 1 shown in FIGs. 1 and 2 has a cubic shape, and includes an upper surface 10, a lower surface 20, and four side surfaces 30. Both the upper surface 10 and the lower surface 20 are flat and typically have the same shape. This makes it possible to vertically stack the gas storage containers 1 one above the other. FIG. 3 shows an example in which three gas storage containers 1A to 1C are vertically stacked.

The side surface 30 of the gas storage container 1 is typically provided with a gas outlet 32. The side surface 30 is provided with a recess 34, and the gas outlet 32 is provided in the recess 34. Adopting such a configuration makes it possible to reduce the occupied volume of the gas storage container 1, thereby facilitating its transportation and the like. The gas outlet 32 usually also serves as a gas inlet.

The gas outlet 32 is typically provided with a gas remaining amount measurement module (not shown). The gas remaining amount measurement module is preferably configured to perform wireless communication. The gas remaining amount measurement module may be configured to perform GPS communication. Adopting such a configuration makes it possible to remotely manage the gas remaining amount in the gas storage container 1.

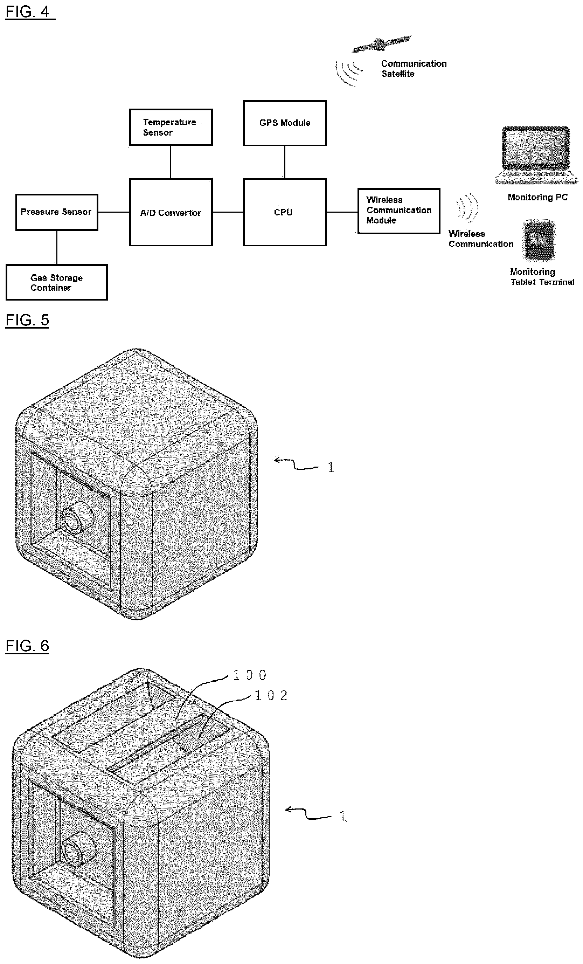

FIG. 4 is a conceptual diagram illustrating an example of a configuration of a gas remaining amount measurement module. The gas remaining amount measurement module shown in FIG. 4 is an Internet of Things (IoT) module, and includes a pressure sensor, a temperature sensor, an analog/digital (A/D) converter connected to both sensors, and a central processing unit (CPU) connected to the A/D converter. The CPU is further connected to a wireless communication module configured to perform wireless communication and a GPS communication module configured to perform GPS communication. The wireless communication module is used, for example, to transmit measurement value data to a monitor PC or tablet etc. In the example shown in FIG. 4, information on temperature (25 °C), position (135.405 degrees east longitude / 35.010 degrees north latitude), and pressure (9.85 MPa) is displayed on the monitor PC or tablet. For instance, a Bluetooth (registered trademark) communication module can be used as the wireless communication module. Using such a gas remaining amount measurement module makes it possible for the user to easily follow the remaining amount and position information of the gas storage container. This also facilitates inventory management and distribution management of the gas storage containers.

The inner surface 70 of the gas storage container 1 has a cubic shape which are substantially the same as the outer shape. Adopting such a configuration makes it possible to maximize the amount of gas stored in the gas storage container 1.

Any material can be used for the gas storage container 1. For example, the gas storage container 1 can be made of a metal or an alloy. Alternatively, the gas storage container 1 may be made of fiber reinforced plastic, or may include both a fiber reinforced plastic and a metal or an alloy. Alternatively, the gas storage container 1 may be made of duralumin. The material used for the gas storage container 1 can be appropriately selected in consideration of formability and weight.

FIG. 5 is a perspective view showing a gas storage container according to another embodiment of the present invention. The gas storage container 1 shown in FIG. 5 has the same configuration as that of the gas storage container 1 shown in FIG. 1 except that it has a larger chamfer. Adopting such a configuration makes it possible to improve the pressure resistance of the gas storage container 1 and to give the user a softer exterior impression. It should be noted that the chamfering as shown in FIG. 1 and FIG. 5 may not be necessary for the gas storage container 1.

FIG. 6 is a perspective view showing a gas storage container according to another embodiment of the present invention. The gas storage container 1 shown in FIG. 6 has the same configuration as that of the gas storage container 1 shown in FIG. 5 except that it further has a grip 100 on the upper surface. Adopting such a configuration makes it easier for the user to transport the gas storage container 1.

In the gas storage container 1 shown in FIG. 6, a recess 102 is provided on the upper surface 10. This configuration allows the grip 100 not to protrude from the upper surface 10. Adopting such a configuration makes it easier to stack the gas storage container 1 in a vertical direction. The grip 100 may be provided on the upper surface 10 so as to be foldable.

The grip 100 may be provided other than the upper surface of the gas storage container 1. In other words, the grip 100 may be provided anywhere outside the gas storage container 1. For example, the grip 100 may be provided on the outer surface of the gas storage container 1 or may be provided on the outer corner of the gas storage container 1.

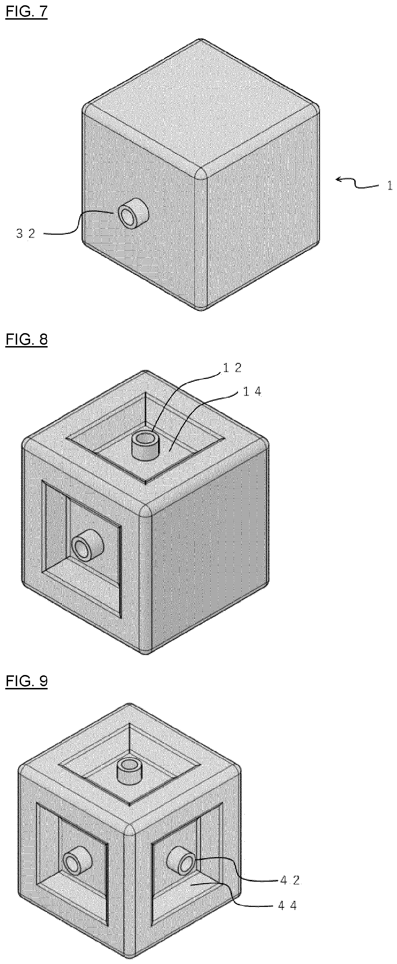

FIG. 7 is a perspective view showing a gas storage container according to another embodiment of the present invention. The gas storage container 1 shown in FIG. 7 has the same configuration as the gas storage container 1 shown in FIG. 1 except that the side surface 30 provided with the gas outlet 32 does not have a recess. Absence of the recess would make it possible to store a generally larger amount of gas compared to the configuration shown in FIG. 1.

FIG. 8 is a perspective view showing a gas storage container according to another embodiment of the present invention. The gas storage container 1 shown in FIG. 8 has the same configuration as the gas storage container 1 shown in FIG. 1 except that the upper surface 10 is also provided with a gas outlet 12 and a recess 14. Adopting such a configuration makes it possible to discharge or introduce gas from both the upper surface 10 and the side surface 30. Moreover, by connecting the gas outlets of the plurality of gas storage containers 1, for example, the effective capacity of the gas storage container 1 can be increased. As described with reference to FIG. 7, the recess 14 may be omitted.

FIG. 9 is a perspective view showing a gas storage container according to another embodiment of the present invention. The gas storage container 1 shown in FIG. 9 has the same configuration as the gas storage container 1 shown in FIG. 8 except that the other side surface 40 is also provided with a gas outlet 42 and a recess 44. Adopting such a configuration makes it possible to discharge or introduce gas from a plurality of side surfaces. Moreover, by connecting the gas outlets of the plurality of gas storage containers 1, for example, the effective capacity of the gas storage container 1 can be increased. As described with reference to FIG. 7, the recess 44 may be omitted. Moreover, gas inlets (and recesses) can also be provided in a lower surface and other side surfaces.

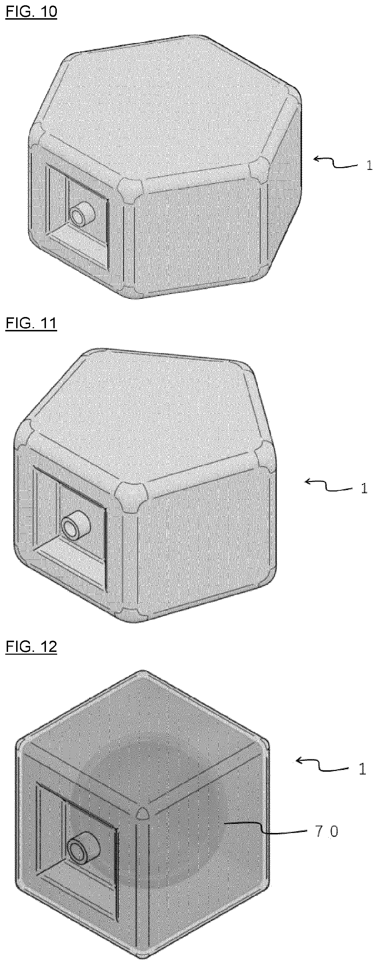

FIGs. 10 and 11 are perspective views showing a gas storage container according to another embodiment of the present invention. The gas storage container 1 shown in FIG. 10 has the same configuration as the gas storage container 1 shown in FIG. 1 except that it has a regular hexagonal prism shape. The gas storage container 1 shown in FIG. 11 has the same configuration as the gas storage container 1 shown in FIG. 1 except that it has a regular pentagonal prism shape. Adopting such shapes also makes it easier to transport and install the gas storage container 1.

The shape of the gas storage container 1 is not particularly limited as long as the upper and lower surfaces are flat and can be stacked vertically. The gas storage container 1 has, for example, a cylindrical shape or a prismatic shape, and preferably has a quadrangular prism shape, a pentagonal prism shape, or a hexagonal prism shape. When the gas storage container 1 has a prismatic shape, the gas storage container 1 preferably has a regular polygonal column shape. The gas storage container 1 is more preferably a rectangular parallelepiped or a cube, and particularly preferably a cube.

The shape of the inner surface of the gas storage container 1 is, for example, substantially the same as the shape of the outer surface, as shown in FIG. 2. The shape of the inner surface of the gas storage container 1 may be different from the shape of the outer surface. For example, the inner surface of the gas storage container 1 may be spherical, cylindrical, or elliptical. Adopting such a configuration makes it possible to improve the pressure resistance of the gas storage container 1.

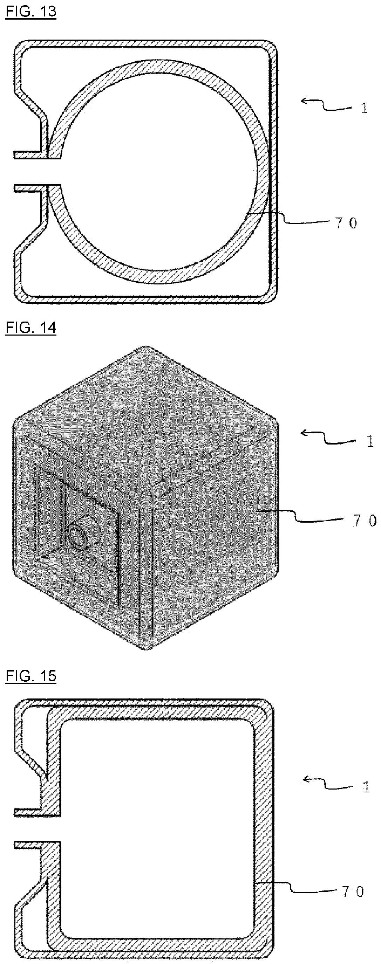

FIG. 12 is a perspective view showing a gas storage container according to another embodiment of the present invention. FIG. 13 is a cross-sectional view of the gas storage container shown in FIG. 12. The gas storage container 1 shown in FIGs. 12 and 13 has the same configuration as the gas storage container 1 shown in FIGs. 1 and 2 except that the inner surface 70 is spherical. Adopting such a configuration makes it possible to improve the pressure resistance of the gas storage container 1.

FIG. 14 is a perspective view showing a gas storage container according to another embodiment of the present invention. FIG. 15 is a cross-sectional view of the gas storage container shown in FIG. 14. The gas storage container 1 shown in FIGs. 14 and 15 has the same configuration as the gas storage container 1 shown in FIGs. 1 and 2 except that the inner surface 70 is cylindrical. Adopting such a configuration makes it possible to improve the pressure resistance of the gas storage container 1.

The gas storage container according to the present invention may include a casing that has a flat upper surface and a flat lower surface and is vertically stackable, and a gas container installed in the casing. In this case, it is possible to provide a gas storage container that can be easily transported and installed regardless of the shape of the gas container. The material used for the casing and the gas container may be different from each other. Therefore, it is possible to adjust the strength, weight, pressure resistance, appearance, and the like of the entire gas storage container by optimizing the material for the casing and the material of the gas container. As the material for the gas container, for example, those exemplified above as the material of the gas storage container can be used. On the other hand, as the material for the casing, plastics, metals, alloys, and the like can be used as appropriate in addition to those exemplified as the material for the gas storage container.

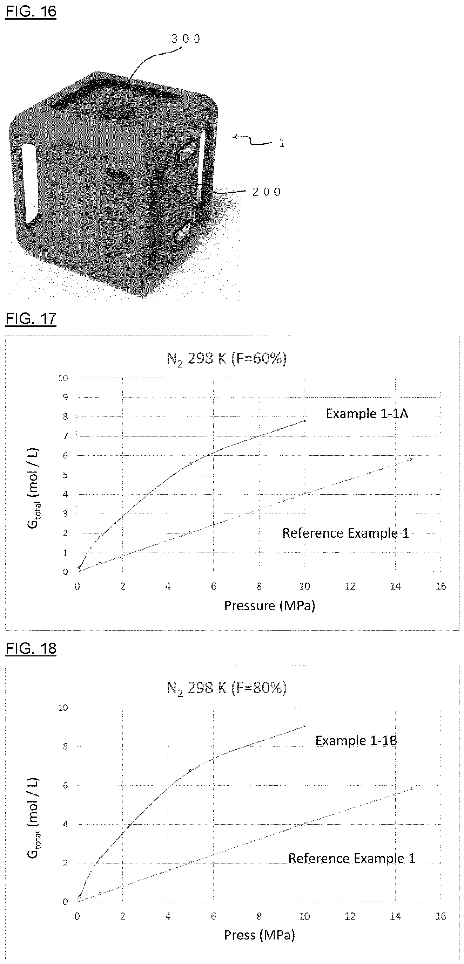

FIG. 16 is a perspective view showing a gas storage container according to another embodiment of the present invention. The gas storage container 1 shown in FIG. 16 includes a casing 200 and a gas container 300 installed therein. The casing 200 has a substantially cubic shape and is made of plastic. A grip is provided at an outer corner portion of the casing 200. The gas container 300 is made of fiber reinforced plastic and is installed in the casing 200. The gas outlet of the gas container 300 is exposed to the outside through the casing 200. Adopting such a configuration makes it possible to provide a gas storage container that is easy to transport and install while enhancing pressure resistance.

When a gas storage container is provided with the casing and the gas container, the gas residual amount measurement module mentioned above can be installed in a space between the casing and the gas container. This makes it difficult to visually recognize the gas residual amount measurement module from the outside, making it less likely to impair the appearance aesthetics.

The gas storage container according to the present invention may further contain a porous material therein. The porous material may be filled so that the gas storage container satisfies the following condition at 298 K for at least one kind of gas. That is, the difference ($\Delta_{1M} = G_{1M} - G_{0.1M}$) between the gas content at 1 MPa ($G_{1M}$) and the gas content at 0.1 MPa ($G_{0.1M}$) when the porous material is contained is at least twice the difference ($\delta_{1M} = g_{1M} - g_{0.1M}$) between the gas content at 1 MPa ($g_{1M}$) and the gas content at 0.1 MPa ($g_{0.1M}$) when the porous material is not contained. In other words, the gas storage container according to the present invention may satisfy $\Delta_{1M}/\delta_{1M}$ & 2 at 298 K for at least one kind of gas.

The gas content at 0.1 MPa ($G_{0.1M}$) is a gas content at almost atmospheric pressure. That is, this value can be a guideline for a limit value at which the gas storage container can release the gas without decompression.

Conventional gas cylinders are usually filled with gas up to a high pressure of 14.7 MPa. This is because the pressure and the gas storage amount are directly proportional to each other in the case of a conventional gas cylinder, so that a sufficient amount of gas cannot be stored unless the pressure is increased. On the other hand, when a gas storage container that satisfies the above conditions is used, a high gas storage amount can be achieved at a relatively low pressure.

The gas storage amount $G_{total}$ of the gas storage container according to this embodiment can be calculated by the following equation.

[Formula 1]

$$G_{total} = G_{ext} + G_{pore} + G_{excess}$$

Here, $G_{ext}$ is a gas storage amount in a region not filled with the porous material. $G_{pore}$ is the storage amount of a normal density gas that has entered the pores of the porous material. $G_{excess}$ is the amount of gas excessively adsorbed by the porous material.

$G_{ext}$ can be calculated by the following equation.

[Formula 2]

$$G_{ext} = \frac{100-F}{100} \times g$$

Here, F is a filling rate (%) of the porous material. g is the gas density (mol/L) at the same pressure. The contribution due to $G_{ext}$ decreases as the filling factor F of the porous material increases. For example, when F = 100%, $G_{ext}$ = 0 mol/L.

$G_{pore}$ can be calculated by the following equation.

[Formula 3]

$$G_{pore} = \frac{F}{100} \times \varepsilon \times g$$

Here, F is a filling rate (%) of the porous material. $\varepsilon$ is the porosity of the porous material, and is a value determined by the product of the density $\rho$ (g/cm$^3$) of the porous material and the pore volume $V_p$ (cm$^3$/g) of the porous material.

$G_{excess}$ can be calculated by the following equation.

[Formula 4]

$$G_{excess} = \frac{F}{100} \times A \times \rho \times \frac{1}{22.7}$$

Here, F is a filling rate (%) of the porous material. A is the gas adsorption amount (cm$^3$(STP)/ g) of the porous material determined by the adsorption amount measurement, $\rho$ is the density (g/cm$^3$) of the porous material. In this formula, it is assumed that the gas is an ideal gas in STP with respect to the volume per mole (22.7 Umol).

As can be seen from the above equation, in order to increase the gas storage quantity $G_{total}$, it is important to increase $G_{excess}$. And in order to increase $G_{excess}$, it is preferable to use a porous material having a large gas adsorption amount A while increasing the filling rate F of the porous material.

The filling rate F (%) of the porous material is not limited as long as the above conditions are satisfied. For example, F is 60% or more, preferably 65% or more, and more preferably 70% or more. In such a case, the effect of increasing the amount of gas stored by filling the porous material becomes more remarkable. The upper limit of the filling rate is 100%, but the filling rate may be slightly lowered from the viewpoint of gas filling efficiency, exhaust heat, and the like. For example, the filling rate of the porous material may be 99% or less. Further, the filling rate may be further reduced in consideration of an increase in the weight of the gas storage container due to the weight of the porous material itself.

As described above, the gas storage container according to this embodiment satisfies $\Delta_{1M}/\delta_{1M}$ & 2 at 298 K for at least one kind of gas. $\Delta_{1M}/\delta_{1M}$ is, for example, 4 or more, preferably 6 or more, more preferably 8 or more, and particularly preferably 10 or more.

The gas storage container according to this embodiment preferably satisfies $\Delta_{5M} / \delta_{5M}$ & 1.5 at 298 K for at least one kind of gas. $\Delta_{5M} / \delta_{5M}$ is, for example, 1.8 or more, preferably 2 or more, more preferably 4 or more, and particularly preferably 5 or more.

The gas storage container according to this embodiment preferably satisfies $\Delta_{10M} / \delta_{10M}$ & 1.2 at 298 K for at least one kind of gas. $\Delta_{10M} / \delta_{10M}$ is, for example, 1.5 or more, preferably 1.8 or more, more preferably 2 or more, and particularly preferably 3 or more.

The gas storage container according to this embodiment preferably satisfies $\Delta_{5M} / \delta_{14.7M}$ & 0.3 at 298 K for at least one kind of gas. $\Delta_{5M} / \delta_{14.7M}$ is, for example, 0.5 or more, preferably 0.6 or more, more preferably 0.8 or more, and particularly preferably 1 or more. When $\Delta_{5M} / \delta_{14.7M}$ is 1 or more, the gas storage container can store an amount of gas at a low pressure of 5 MPa which is equal to or higher than the amount in an empty cylinder at 14.7 MPa

The gas storage container according to this embodiment preferably satisfies $\Delta_{1M} / \delta_{14.7M}$ & 0.1 at 298 K for at least one kind of gas. $\Delta_{1M} / \delta_{14.7M}$ is, for example, 0.2 or more, preferably 0.4 or more, more preferably 0.6 or more, still more preferably 0.8 or more, and particularly preferably 1 or more. When $\Delta_{1M} / \delta_{14.7M}$ is 1 or more, the gas storage container can store an amount of gas at a low pressure of 1 MPa which is equal to or higher than the amount in an empty cylinder at 14.7 MPa.

As the porous material, for example, a metal organic framework (hereinafter also referred to as MOF), activated carbon, zeolite, mesoporous silica, or the like can be used. It is particularly preferable to use the MOF as the porous material. A plurality of types of porous materials may be used in combination.

When the MOF is employed as the porous material, any types of MOFs can be used. Appropriately combining the type and coordination number of the metal ion with the type and topology of the multidentate ligand leads to a MOF with a desired structure.

The metal elements in the MOF can be, for example, any elements belonging to alkali metals (Group 1), alkaline earth metals (Group 2), or transition metals (Groups 3 to 12). The multidentate ligand in the MOF typically is an organic ligand, examples of which include carboxylate anion and heterocyclic compound. Examples of the carboxylic acid anion include dicarboxylic acid anion and tricarboxylic acid anion. Specific examples include anions of citric acid, malic acid, terephthalic acid, isophthalic acid, trimesic acid, and derivatives thereof. Examples of the heterocyclic compound include bipyridine, imidazole, adenine, and derivatives thereof. Alternatively, the ligand may be an amine compound, a sulfonate anion, or a phosphate anion. The MOF may further contain monodentate ligand(s).

The combination of the metal and the ligand forming the MOF can be appropriately determined according to the expected function and the desired pore size. The MOF may contain two or more types of metal elements, and may contain two or more types of ligands. The MOF can be surface-modified with a polymer or other modifiers.

As specific examples of the metal organic structure, for example, those listed in Table 1 of the literature (Yabing He et al. Methane Storage in Metal-Organic Frameworks, Chem Soc Rev, 2014) can be used. Alternatively, those listed in other documents (Chem. Sci., 2014, 5, 32-51) may also be used. Those shown in Tables 1 to 3 below may also be used as the MOF. These are non-limiting lists, and other MOFs can also be used.

Table 1

| Name/Abbreviation | Metal (Cation) | Ligand (Anion) |
|---|---|---|
| CPL-1 | Cu | pzdc (2,3-pyrazinedicarboxylic acid), pyz (pyrazine) |
| $Cu_3(btc)_2$ | Cu | BTC (trimesic acid) |
| Zn)$_2$(14bdc)$_2$(dabco) | Zn | BDC (terephthalic acid), dabco (1,4-diazabicyclo[2,2,2]octane) |
| ZIF-8 | Zn | imidazole |
| HKUST-1 | Cu | 1,3,5-benzenetricarboxylic acid |
| $Mg_3(C_{12}O_{14}H_{10})$ | Mg | citric acid |
| $Ca_2(C_8O_{12}H_6)$ | Ca | malic acid |
| $Ca_3(C_{12}O_{14}H_{10})$ | Ca | citric acid |
| $Ca(C_4O_6H_4)$ | Ca | malic acid |
| Cu(IPA) | Cu | isophthalic acid |
| MgBDC-1 | Mg | BDC (terephthalic acid) |
| MgDHBDC-1 | Mg | DHBDC (2,5-dihydroxyterephthalic acid) |
| MgOBA-1 | Mg | OBA (4,4'-oxobisbenzoic acid) |

(continued)

| Name/Abbreviation | Metal (Cation) | Ligand (Anion) |
|---|---|---|
| MgBTC-1 | Mg | BTC (trimesic acid) |
| MgBTB-1 | Mg | BTB (1,3,5-tri(4'-carboxy-4,4'-biphenyl)benzene) |
| MgBTB-2 | Mg | BTB (1,3,5-tri(4'-carboxy-4,4'-biphenyl)benzene) |
| MgBTB-3 | Mg | BTB (1,3,5-tri(4'-carboxy-4,4'-biphenyl)benzene) |
| MgBTB-4 | Mg | BTB (1,3,5-tri(4'-carboxy-4,4'-biphenyl)benzene) |
| MgBBC-1 | Mg | BBC (4,4'-4"-benzene-1,3,5-triyl-tri-biphenylcarboxylic acid) |
| MIL-100(Fe) | Fe | BTC (trimesic acid) |
| MIL-101 | Fe | BDC (terephthalic acid) |
| MIL-53 | Fe | BDC (terephthalic acid) |
| BioMIL-5 | Zn | azelaic acid |
| CaZol nMOF | Ca | zoledronic acid |
| IRMOF-2 | Zn | o-Br-BDC (o-bromoterephthalic acid) |
| IRMOF-3 | Zn | $H_2N$-BDC (2-aminoterephthalic acid) |
| IRMOF-4 | Zn | $[C_3H_7O]_2$-BDC |
| IRMOF-5 | Zn | $[C_5H_{11}O]_2$-BDC |
| IRMOF-6 | Zn | $[C_2H_4]$-BDC |
| IRMOF-7 | Zn | 1,4-NDC (1,4-naphthalenedicarboxylic acid) |
| IRMOF-8 | Zn | 2,6-NDC (2,6-naphthalenedicarboxylic acid) |
| IRMOF-9 | Zn | BPDC (4,4'-biphenyldicarboxylic acid) |
| IRMOF-10 | Zn | BPDC (4,4'-biphenyldicarboxylic acid) |
| IRMOF-11 | Zn | HPDC (tetrahydropyrene-2,7-dicarboxylic acid) |
| IRMOF-12 | Zn | HPDC (tetrahydropyrene-2,7-dicarboxylic acid) |
| IRMOF-13 | Zn | PDC (pyrene dicarboxylic acid) |
| IRMOF-14 | Zn | PDC (pyrene dicarboxylic acid) |
| IRMOF-15 | Zn | TPDC (terphenyl dicarboxylic acid) |
| IRMOF-16 | Zn | TPDC (terphenyl dicarboxylic acid) |

Table 2

| Name/Abbreviation | Metal (Cation) | Ligand (Anion) |
|---|---|---|
| $Zn_3(BTC)_2$ | Zn | BTC (trimesic acid) |
| $Zn_4O(NDC)$ | Zn | 1,4-NDC (1,4-naphthalenedicarboxylic acid) |
| Mg(Formate) | Mg | formic acid |
| Fe(Formate) | Fe | formic acid |
| $Mg(C_6H_4O_6)$ | Mg | DHBDC (2,5-dihydroxyterephthalic acid) |
| $ZnC_2H_4BDC$ | Zn | $[C_2H_4]$-BDC |
| MOF-49 | Zn | m-BDC |
| BPR95A2 | Zn | BDC (terephthalic acid) |

(continued)

| Name/Abbreviation | Metal (Cation) | Ligand (Anion) |
|---|---|---|
| BPR76D5 | Zn | BzPDC |
| BPR68D10 | Zn | BTC (trimesic acid) |
| BPR56E1 | Zn | BDC (terephthalic acid) |
| BPR49B1 | Zn | BDC (terephthalic acid) |
| BPR43G2 | Zn | BDC (terephthalic acid) |
| NO336 | Fe | formic acid |
| NO335 | Fe | formic acid |
| NO333 | Fe | formic acid |
| PCN-14 | Nb | 5,5'-(9,10-anthracenediyl) diisophosphate |
| $Zn_4BNDC$ | Zn | BNDC (1,1'-binaphthyl-4,4'-dicarboxylic acid) |
| $Zn_3(BPDC)$ | Zn | BPDC (4,4'-biphenyldicarboxylic acid) |
| ZnDBP | Zn | DBP (dibenzyl phosphate) |
| $Zn_3(PDC)_{2.5}$ | Zn | PDC (pyrene dicarboxylic acid) |
| Zn(HPDC) | Zn | HPDC (tetrahydropyrene-2,7-dicarboxylic acid) |
| Zn(NDC) | Zn | 2,6-NDC (2,6-naphthalenedicarboxylic acid) |
| MOF-37 | Zn | 2,6-NDC (2,6-naphthalenedicarboxylic acid) |
| MOF-20 | Zn | 2,6-NDC (2,6-naphthalenedicarboxylic acid) |
| MOF-12 | Zn | ATC (1,3,5,7-adamantanetetracarboxylic acid) |
| Zn(ADC) | Zn | ADC (acetylenedicarboxylic acid) |
| MOF-0 | Zn | BTC (trimesic acid) |
| MOF-2 | Zn | BDC (terephthalic acid) |
| MOF-3 | Zn | BDC (terephthalic acid) |
| MOF-4 | Zn | BTC (trimesic acid) |
| MOF-5 | Zn | BDC (terephthalic acid) |
| MOF-38 | Zn | BTC (trimesic acid) |
| MOF-31 | Zn | ADC (acetylenedicarboxylic acid) |
| MOF-69A | Zn | BPDC (4,4'-biphenyldicarboxylic acid) |
| MOF-69B | Zn | 2,6-NDC (2,6-naphthalenedicarboxylic acid) |
| MOF-33 | Zn | ATB (adamantanetetrabenzoic acid) |
| MOF-36 | Zn | MTB (methanetetrabenzoic acid) |
| MOF-39 | Zn | BTB (1,3,5-tri(4'-carboxy-4,4'-biphenyl)benzene) |

Table 3

| Name/Abbreviation | Metal (Cation) | Ligand (Anion) |
|---|---|---|
| NO305 | Fe | formic acid |
| NO306A | Fe | formic acid |
| BPR48A2 | Zn | BDC (terephthalic acid) |

(continued)

| Name/Abbreviation | Metal (Cation) | Ligand (Anion) |
|---|---|---|
| $Zn(C_2O_4)$ | Zn | oxalic acid |
| MOF-48 | Zn | 2,6-NDC (2,6-naphthalenedicarboxylic acid) |
| MOF-47 | Zn | $BDC(CH_3)_4$ |
| $Zn_3(BTC)_2$ | Zn | BTC (trimesic acid) |
| MOF-n | Zn | BTC (trimesic acid) |
| Zehex | Zn | BTB (1,3,5-tri(4'-carboxy-4,4'-biphenyl)benzene) |
| AS16 | Fe | BDC (terephthalic acid) |
| AS27-3 | Fe | BDC (terephthalic acid) |
| AS54-3 | Fe | BPDC (4,4'-biphenyldicarboxylic acid) |
| AS61-4 | Fe | m-BDC |
| AS68-7 | Fe | m-BDC |
| $Zn_8(ad)_4(PDAC)_6(OH)_2$ | Zn | adenine, PDAC (1,4-diphenyl diacrylic acid) |
| $Zn_8(ad)_4(SBDC)_6(OH)_2$ | Zn | adenine, SBDC (4,4'-stilbene dicarboxylic acid) |
| $Zn_8(ad)_4(BPDC)_6(OH)_2$ | Zn | adenine, BPDC |
| $Zn_8(ad)_4(NDC)_6(OH)_2$ | Zn | adenine, 2,6-NDC |
| M-CPO-27 | Mg | DHBDC (2,5-dihydroxyterephthalic acid) |
| bio-MOF-1 | Zn | adenine, BPDC |
| UMCM-1 | Zn | BTB (1,3,5-tri(4'-carboxy-4,4'-biphenyl)benzene) |
| UMCM-2 | Zn | BTB (1,3,5-tri(4'-carboxy-4,4'-biphenyl)benzene) |
| MOF-210 | Zn | BTE (4,4',4"-[benzene-1,3,5-triyl-tris (ethyne-2, 1-diyl)] tribenzoic acid), BPDC |
| bio-MOF-100 | Zn | adenine, BPDC |
| NU-110E | Cu | J. Am. Chem. Soc. 2012, 134, 15016-15021 |
| CD-MOF-1 | K | γ-CD (γ-cydodexthn) |
| porph@MOM-4 | Fe | porphyrin, BTC |
| porph@MOM-8 | Mg | porphyrin, BTC |
| porph@MOM-9 | Zn | porphyrin, BTC |
| ZnPO-MOF | Zn | metalloporphyrin pyridyl,TCPB (1,2,4,5-Tetrakis(4-carboxyphenyl) benzene) |
| Uio-66 | Fe | DCBDT (1,4-dicarboxylbenzene-2,3-dithiolate) |
| $Mg(H_2gal)$ | Mg | caustic acid (3,4,5-trihydroxybenzoic acid) |

There is no restriction in the form of the porous material. As the porous material, for example, a powdery material, a pellet material, a bead material, a film material, or a block material may be used. A plurality of forms of porous materials may be used in combination.

There is no restriction in the kind of gas stored in the gas storage container. Examples of such gases include nitrogen; oxygen; air; carbon dioxide; rare gases such as helium, neon, argon, krypton, and xenon; hydrogen; saturated hydrocarbons such as methane, ethane, and propane; acetylene; fluorocarbons such as difluoromethane; LP gas; natural gas; monosilane; theos; dichlorosilane; arsine; phosphine; diborane; boron trichloride; carbon tetrafluoride; nitrogen trifluoride; hydrogen bromide; chlorine; tungsten hexafluoride; hydrogen selenide; monogermane; ethylene oxide; nitrous oxide; and ammonia. Among these, it is particularly preferable to use a gas selected from the group consisting of nitrogen, oxygen, air, carbon dioxide, methane, and hydrogen.

**EXAMPLES**

[Occupied Volume]

As described above, according to the present invention, a gas storage container that can be easily transported and installed is provided. Hereinafter, taking the gas storage container described with reference to FIGs. 1 to 3 as an example, it will be shown that the efficiency of the occupied volume can also be improved.

- Conventional gas cylinders have the shape of bottles. Typically, its diameter is 23.2 cm, its height is 151 cm, and its volume is 47L. In addition to this, components for fixing the gas cylinder is required. Hereinafter, it is assumed that the fixing component has a bottom shape of 25cm × 25cm square.

On the other hand, let us assume that a gas storage container described with reference to FIGs. 1 to 3 is a cubic container having the same side length of 25 cm. In this case, the volume per gas storage container is 25 cm × 25 cm × 25 cm = about 15.6 L. As mentioned above, this gas storage container can be stacked vertically. Assuming the same height as the conventional gas cylinder, six gas storage containers can be stacked. In this case, the total volume is about 15.6L × 6 = about 94L. That is, the capacity can be approximately doubled for almost the same occupied volume. In other words, if three gas storage containers are stacked, a capacity equivalent to that of one conventional gas cylinder can be achieved. Which also means, in this case, the occupied volume can be reduced to about half.

Further, as described above, the amount of stored gas can be further improved by introducing a porous material into the gas storage container. Hereinafter, the effect of the porous material will be additionally described.

[Preparation of Porous Material]

The porous materials used herein are summarized in Table 4 below. In the table, HKUST-1 was synthesized using a twin-screw extruder according to the literature (Chem. Sci., 2015, 6, 1645-1649). ZIF-8, MIL-53 (AI), AX-21, and 13X are commercially available. The density and pore volume in the table were extracted from the literature (Chem. Sci., 2014, 5, 32-51).

Table 4

| Porous Material | Category | Density $\rho$ (g/cm$^3$) | Pore Volume Vp (cm$^3$/g) | Porocity $\varepsilon$ |
|---|---|---|---|---|
| HKUST-1 | MOF | 0.881 | 0.770 | 0.678 |
| ZIF-8 | MOF | 1.14 | 0.49 | 0.559 |
| MIL-53 (AI) | MOF | 0.978 | 0.54 | 0.528 |
| AX-21 | Activated Carbon | 0.487 | 1.640 | 0.799 |
| X13 | Zeolite | 1.48 | 0.200 | 0.296 |

[Measurement of Adsorption Amount]

The amount of adsorption was measured using BELSORP-HP (Microtrack Bell Co., Ltd.) at 298K. The porous materials in powder form were used for the measurements.

[Nitrogen]

A comparison was made for the cases where the filling factor F was 60% and nitrogen was used as the gas. The results are summarized in Table 5 below and FIG. 17.

Table 5

| Example | Porous Material | Filling Rate | Pressure (MPa) | $G_{ext}$ (mol/L) | $G_{pore}$ (mol/L) | $G_{excess}$ (mol/L) | $G_{total}$ (mol/L) |
|---|---|---|---|---|---|---|---|
| Example 1-1A | HKUST-1 | 60% | 10 | 1.61 | 1.64 | 4.55 | 7.79 |
| | | | 5 | 0.81 | 0.83 | 3.93 | 5.57 |
| | | | 1 | 0.17 | 0.17 | 1.44 | 1.78 |
| | | | 0.1 | 0.02 | 0.02 | 0.17 | 0.20 |
| Reference Example 1 | None (Empty) | - | 14.7 | - | - | - | 5.80 |
| | | | 10 | - | - | - | 4.02 |
| | | | 5 | - | - | - | 2.03 |
| | | | 1 | - | - | - | 0.42 |
| | | | 0.1 | - | - | - | 0.04 |

| Example | $\Delta_{1M}$ (mol/L) | $\Delta_{1M}/\delta_{1M}$ | $\Delta_{5M}$ (mol/L) | $\Delta_{5M}/\delta_{5M}$ | $\Delta_{10M}$ (mol/L) | $\Delta_{10M}/\Delta_{10M}$ | $\Delta_{5M}/\delta_{14.7M}$ | $\Delta_{1M}/\delta_{14.7M}$ |
|---|---|---|---|---|---|---|---|---|
| Example 1-1A | 1.57 | 4.21 | 5.37 | 2.70 | 7.59 | 1.91 | 0.93 | 0.27 |
| Reference Example 1 | 0.37 | 1 | 1.98 | 1.00 | 3.98 | 1.00 | - | - |

A comparison was made for the cases where the filling factor F was 80% and nitrogen was used as the gas. The results are summarized in Table 6 below and FIG. 18.

Table 6

| Example | Porous Material | Filling Rate | Pressure (MPa) | | $G_{ext}$ (mol/L) | $G_{pore}$ (mol/L) | $G_{excess}$ (mol/L) | $G_{total}$ (mol/L) |
|---|---|---|---|---|---|---|---|---|
| Example 1-1B | HKUST-1 | 80% | | 10 | 0.80 | 2.18 | 6.06 | 9.05 |
| | | | | 5 | 0.41 | 1.10 | 5.24 | 6.75 |
| | | | | 1 | 0.08 | 0.23 | 1.92 | 2.23 |
| | | | | 0.1 | 0.01 | 0.02 | 0.22 | 0.25 |
| Reference Example 1 | None (Empty) | - | | 14.7 | - | - | - | 5.80 |
| | | | | 10 | - | - | - | 4.02 |
| | | | | 5 | - | - | - | 2.03 |
| | | | | 1 | - | - | - | 0.42 |
| | | | | 0.1 | - | - | - | 0.04 |

| Example | $\Delta_{1M}$ (mol/L) | $\Delta_{1M}/\delta_{1M}$ | $\Delta_{5M}$ (mol/L) | $\Delta_{5M}/\delta_{5M}$ | $\Delta_{10M}$ (mol/L) | $\Delta_{10M}/\Delta_{10M}$ | $\Delta_{5M}/\delta_{14.7M}$ | $\Delta_{1M}/\delta_{14.7M}$ |
|---|---|---|---|---|---|---|---|---|
| Example 1-1B | 1.97 | 5.28 | 6.49 | 3.27 | 8.79 | 2.21 | 1.13 | 0.34 |
| Reference Example 1 | 0.37 | 1 | 1.98 | 1.00 | 3.98 | 1.00 | - | - |

[Oxygen]

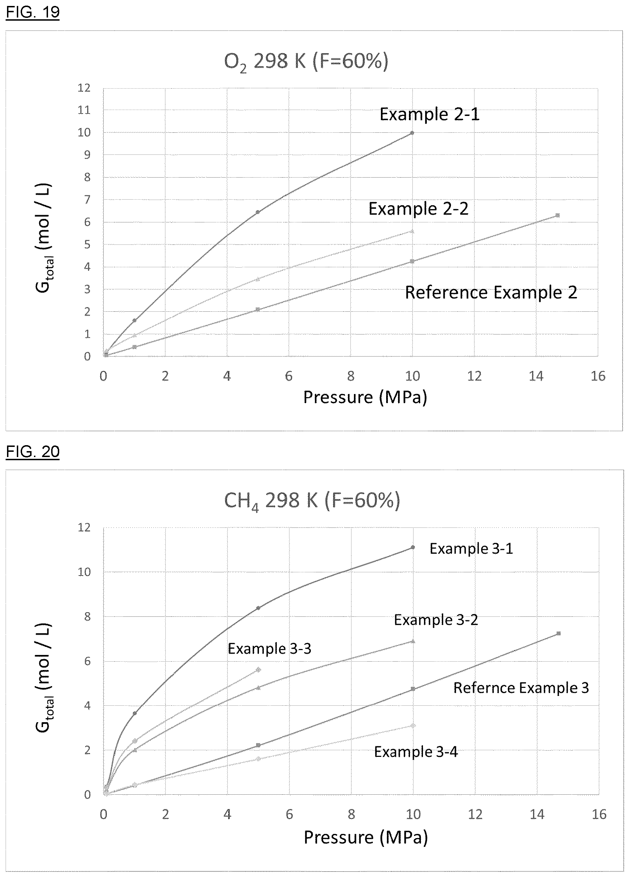

A comparison was made for the cases where the filling factor F was 60% and oxygen was used as the gas. The results are summarized in Table 7 below and FIG. 19.

Table 7

| Example | Porous Material | Filling Rate | Pressure (MPa) | $G_{ext}$ (mol/L) | $G_{pore}$ (mol/L) | $G_{excess}$ (mol/L) | $G_{total}$ (mol/L) |
|---|---|---|---|---|---|---|---|
| Example 2-1 | HKUST-1 | 60% | 10 | 1.70 | 1.73 | 6.55 | 9.98 |
| | | | 5 | 0.83 | 0.85 | 4.76 | 6.44 |
| | | | 1 | 0.16 | 0.17 | 1.27 | 1.60 |
| | | | 0.1 | 0.02 | 0.02 | 0.15 | 0.18 |
| Example 2-2 | AX-21 | 60% | 10 | 1.70 | 2.03 | 1.87 | 5.60 |
| | | | 5 | 0.83 | 1.00 | 1.64 | 3.47 |
| | | | 1 | 0.16 | 0.20 | 0.58 | 0.94 |
| | | | 0.1 | 0.02 | 0.02 | 0.23 | 0.27 |
| Reference Example 2 | None (Empty) | - | 14.7 | - | - | - | 6.29 |
| | | | 10 | - | - | - | 4.24 |
| | | | 5 | - | - | - | 2.08 |
| | | | 1 | - | - | - | 0.41 |
| | | | 0.1 | - | - | - | 0.04 |

| Example | $\Delta_{1M}$ (mol/L) | $\Delta_{1M}/\delta_{1M}$ | $\Delta_{5M}$ (mol/L) | $\Delta_{5M}/\delta_{5M}$ | $\Delta_{10M}$ (mol/L) | $\Delta_{10M}/\Delta_{10M}$ | $\Delta_{5M}/\delta_{14.7M}$ | $\Delta_{1M}/\delta_{14.7M}$ |
|---|---|---|---|---|---|---|---|---|
| Example 2-1 | 1.42 | 3.87 | 6.25 | 1.96 | 9.80 | 2.33 | 1.00 | 0.23 |
| Example 2-2 | 0.67 | 1.84 | 3.19 | 1.57 | 5.33 | 1.27 | 0.51 | 0.11 |
| Reference Example 2 | 0.37 | 1 | 2.04 | 1.00 | 4.20 | 1.00 | - | - |

[Methane]

A comparison was made for the cases where the filling rate was F = 60% and methane was used as the gas. The results are summarized in Table 8 below and FIG. 20.

Table 8

| Example | Porous Material | Filling Rate | Pressure (MPa) | $G_{ext}$ (mol/L) | $G_{pore}$ (mol/L) | $G_{excess}$ (mol/L) | $G_{total}$ (mol/L) |
|---|---|---|---|---|---|---|---|
| Example 3-1 | HKUST-1 | 60% | 10 | 1.90 | 1.93 | 7.27 | 11.10 |
| | | | 5 | 0.88 | 0.90 | 6.61 | 8.39 |
| | | | 1 | 0.17 | 0.17 | 3.30 | 3.64 |
| | | | 0.1 | 0.02 | 0.02 | 0.33 | 0.37 |
| Example 3-2 | ZIF-8 | 60% | 10 | 1.90 | 1.59 | 3.42 | 6.91 |
| | | | 5 | 0.88 | 0.74 | 3.21 | 4.83 |
| | | | 1 | 0.17 | 0.14 | 1.71 | 2.01 |
| | | | 0.1 | 0.02 | 0.01 | 0.21 | 0.25 |
| Example 3-3 | MIL-53 (Al) | 60% | 10 | - | - | - | - |
| | | | 5 | 0.88 | 0.70 | 4.05 | 5.63 |
| | | | 1 | 0.17 | 0.13 | 2.11 | 2.41 |
| | | | 0.1 | 0.02 | 0.01 | 0.29 | 0.33 |
| Example 3-4 | 13X | 60% | 10 | 1.90 | 0.84 | 0.37 | 3.10 |
| | | | 5 | 0.88 | 0.39 | 0.33 | 1.60 |
| | | | 1 | 0.17 | 0.07 | 0.21 | 0.44 |
| | | | 0.1 | 0.02 | 0.01 | 0.03 | 0.05 |
| Reference Example 3 | None (Empty) | - | 14.7 | - | - | - | 7.24 |
| | | | 10 | - | - | - | 4.74 |
| | | | 5 | - | - | - | 2.20 |
| | | | 1 | - | - | - | 0.41 |
| | | | 0.1 | - | - | - | 0.04 |

| Example | $\Delta_{1M}$ (mol/L) | $\Delta_{1M}/\delta_{1M}$ | $\Delta_{5M}$ (mol/L) | $\Delta_{5M}/\delta_{5M}$ | $\Delta_{10M}$ (mol/L) | $\Delta_{10M}/\Delta_{10M}$ | $\Delta_{5M}/\delta_{14.7M}$ | $\Delta_{1M}/\delta_{14.7M}$ |
|---|---|---|---|---|---|---|---|---|
| Example 3-1 | 3.27 | 8.84 | 8.02 | 3.71 | 10.73 | 2.28 | 1.11 | 0.45 |
| Example 3-2 | 1.77 | 4.78 | 4.58 | 2.12 | 6.66 | 1.42 | 0.64 | 0.25 |

(continued)

| Example | $\Delta_{1M}$ (mol/L) | $\Delta_{1M}/\delta_{1M}$ | | $\Delta_{5M}$ (mol/L) | $\Delta_{5M}/\delta_{5M}$ | $\Delta_{10M}$ (mol/L) | $\Delta_{10M}/\Delta_{10M}$ | $\Delta_{5M}/\delta_{14.7M}$ | $\Delta_{1M}/\delta_{14.7M}$ |
|---|---|---|---|---|---|---|---|---|---|
| Example 3-3 | 2.08 | 5.63 | 5.30 | 2.46 | - | - | 0.34 | 0.29 | |
| Example 3-4 | 0.39 | 1.05 | 1.55 | 0.72 | 3.05 | 0.65 | 0.21 | 0.05 | |
| Reference Example 3 | 0.37 | 1 | 2.16 | 1.00 | 4.70 | 1.00 | - | - | |

20

**DESCRIPTION OF SYMBOLS**

1, 1A, 1B, 1C: gas storage container,
10: Upper surface,
12: gas outlet (gas inlet),
14: recess,
20: lower surface,
30: side surface,
32: gas outlet (gas inlet),
34: recess,
40: side surface,
42: gas outlet (gas inlet),
44: recess,
70: inner surface,
100: grip
102: recess
200: casing,
300: gas container

**Claims**

1. A gas storage container (1) comprising a flat upper surface (10) and a flat lower surface (20), and being vertically stackable, further comprising a porous material therein, the gas storage container (1) comprises:

    a casing (200) with the flat upper surface (10) and the flat lower surface (20) which are vertically stackable;
    a gas container (300) installed in the casing (200) and comprising the porous material therein; and **characterized in**
    a gas remaining amount measurement module installed in a space between the casing (200) and the gas container (300).

2. The gas storage container (1) according to claim 1, wherein the porous material is a metal organic framework.

3. The gas storage container (1) according to claim 1 or 2, wherein the gas storage container (1) satisfies $\Delta_{1M}/\Delta_{1M} \geqq 2$ at 298 K for at least one kind of gas, in which $\Delta_{1M} = G_{1M} - G_{0.1M}$ and $\delta_{1M} = g_{1M} - g_{0.1M}$, and $G_{1M}$ is a content of the gas at 1MPa when the porous material is contained, $G_{0.1M}$ is a content of the gas at 0.1MPa when the porous material is contained, $g_{1M}$ is a content of the gas at 1MPa when the porous material is not contained, and $g_{0.1M}$ is a content of the gas at 0.1MPa when the porous material is not contained.

4. The gas storage container (1) according to any one of claims 1 to 3, wherein a filling rate F of the porous material in the gas container (300) is 99% or less.

5. The gas storage container (1) according to any one of claims 1 to 4, wherein a material used for the casing (200) and a material used for the gas container (300) are different from each other.

6. The gas storage container (1) according to any one of claims 1 to 5, wherein the casing (200) is made of plastic.

7. The gas storage container (1) according to any one of claims 1 to 6, wherein the gas container (300) is made of fiber reinforced plastic.

8. The gas storage container (1) according to any one of claims 1 to 7, wherein a single gas container (300) is installed in the casing (200).

9. The gas storage container (1) according to any one of claims 1 to 8, wherein the gas container (300) comprises a single gas outlet (32) being exposed to an outside of the gas storage container (1) through a hole provided in a side surface (30) of the casing (200), and the gas outlet (32) is configured to also serve as a gas inlet.

10. The gas storage container (1) according to claim 9, wherein the casing (200) has a recess (34) in the side surface (30) thereof and the gas outlet (32) is provided in the recess (34).

11. The gas storage container (1) according to any one of claims 1 to 10, wherein a grip (100) is provided at an outer corner portion of the casing (200).

12. The gas storage container (1) according to claim 11, wherein the grip (100) is integrated with the casing (200) by providing a hollow portion in the outer corner portion of the casing (200).

13. The gas storage container (1) according to any one of claims 1 to 12, wherein the gas remaining amount measurement module comprises a temperature sensor.

14. The gas storage container (1) according to any one of claims 1 to 13, wherein the gas remaining amount measurement module is configured to be capable of wireless communication.

15. The gas storage container (1) according to any one of claims 1 to 14, wherein the gas remaining amount measurement module is configured to perform GPS communication.

**Patentansprüche**

1. Gasspeicherbehälter (1), der eine flache obere Fläche (10) und eine flache untere Fläche (20) aufweist und vertikal stapelbar ist, und der ferner ein poröses Material darin aufweist,
der Gasspeicherbehälter (1) umfasst Folgendes:

   ein Gehäuse (200) mit der flachen obere Fläche (10) und der flachen untere Fläche (20), die vertikal stapelbar sind;
   einen Gasbehälter (300), der in dem Gehäuse (200) installiert ist und das poröse Material darin umfasst; und durch Folgendes gekennzeichnet ist
   ein Modul zur Messung der Gasrestmenge, das in einem Raum zwischen dem Gehäuse (200) und dem Gasbehälter (300) installiert ist.

2. Gasspeicherbehälter (1) nach Anspruch 1, wobei das poröse Material ein metallorganisches Gerüst ist.

3. Gasspeicherbehälter (1) nach Anspruch 1 oder 2, wobei der Gasspeicherbehälter (1) $\Delta_{1M}/\delta_{1M} \geq 2$ bei 298 K für mindestens eine Gasart erfüllt, wobei $\Delta_{1M}=G_{1M}-G_{0.1M}$ und $\delta_{1M}=g_{1M}-g_{0.1M}$ und $G_{1M}$ ein Gehalt des Gases bei 1 MPa ist, wenn das poröse Material enthalten ist, $G_{0.1M}$ ein Gehalt des Gases bei 0,1 MPa ist, wenn das poröse Material enthalten ist, $G_{1M}$ ein Gehalt des Gases bei 1 MPa ist, wenn das poröse Material nicht enthalten ist, und $g_{0.1M}$ ein Gehalt des Gases bei 0,1 MPa ist, wenn das poröse Material nicht enthalten ist.

4. Gasspeicherbehälter (1) nach einem der Ansprüche 1 bis 3, wobei der Füllgrad F des porösen Materials in dem Gasbehälter (300) 99 % oder weniger beträgt.

5. Gasspeicherbehälter (1) nach einem der Ansprüche 1 bis 4, wobei ein für das Gehäuse (200) verwendetes Material und ein für den Gasbehälter (300) verwendetes Material voneinander verschieden sind.

6. Gasspeicherbehälter (1) nach einem der Ansprüche 1 bis 5, wobei das Gehäuse (200) aus Kunststoff besteht.

7. Gasspeicherbehälter (1) nach einem der Ansprüche 1 bis 6, wobei der Gasbehälter (300) aus faserverstärktem Kunststoff hergestellt ist.

8. Gasspeicherbehälter (1) nach einem der Ansprüche 1 bis 7, wobei ein einzelner Gasbehälter (300) in das Gehäuse (200) eingebaut ist.

9. Gasspeicherbehälter (1) nach einem der Ansprüche 1 bis 8, wobei der Gasbehälter (300) einen einzelnen Gasauslass (32) aufweist, der durch ein in einer Seitenfläche (30) des Gehäuses (200) vorgesehene Öffnung zur Außenseite des Gasspeicherbehälters (1) hin freiliegt, und der Gasauslass (32) so konfiguriert ist, dass er auch als Gaseinlass dient.

**10.** Gasspeicherbehälter (1) nach Anspruch 9, wobei das Gehäuse (200) eine Ausnehmung (34) in seiner Seitenfläche (30) aufweist und der Gasauslass (32) in der Ausnehmung (34) vorgesehen ist.

**11.** Gasspeicherbehälter (1) nach einem der Ansprüche 1 bis 10, wobei an einem äußeren Eckbereich des Gehäuses (200) ein Griff (100) vorgesehen ist.

**12.** Gasspeicherbehälter (1) nach Anspruch 11, wobei der Griff (100) in das Gehäuse (200) integriert ist, indem ein hohler Abschnitt in dem äußeren Eckabschnitt des Gehäuses (200) vorgesehen ist.

**13.** Gasspeicherbehälter (1) nach einem der Ansprüche 1 bis 12, wobei das Modul zur Messung der Gasrestmenge einen Temperatursensor umfasst.

**14.** Gasspeicherbehälter (1) nach einem der Ansprüche 1 bis 13, wobei das Modul zur Messung der Gasrestmenge so konfiguriert ist, dass es zur drahtlosen Kommunikation fähig ist.

**15.** Gasspeicherbehälter (1) nach einem der Ansprüche 1 bis 14, wobei das Modul zur Messung der Gasrestmenge so konfiguriert ist, dass es GPS-Kommunikation durchführt.


**Revendications**

**1.** Un réservoir de stockage de gaz (1) comprenant une surface supérieure plate (10) et une surface inférieure plate (20), et étant empilable verticalement, comprenant en outre un matériau poreux à l'intérieur,
le réservoir de stockage de gaz (1) comprend :

   un boîtier (200) dont la surface supérieure plate (10) et la surface inférieure plate (20) sont empilables verticalement ;
   un réservoir de gaz (300) installé dans le boîtier (200) et comprenant le matériau poreux à l'intérieur ; et **caractérisé par**
   un module de mesure de la quantité de gaz restante installé dans un espace situé entre le boîtier (200) et le réservoir de gaz (300).

**2.** Le réservoir de stockage de gaz (1) selon la revendication 1, dans lequel le matériau poreux est une structure métallo-organique.

**3.** Le réservoir de stockage de gaz (1) selon la revendication 1 ou 2, où le réservoir de stockage de gaz (1) satisfait $\Delta_{1M}/\delta_{1M} \geq 2$ à 298 K pour au moins un type de gaz, dans lequel $\Delta_{1M}=G_{1M}-G_{0,1M}$ et $\delta_{1M}=g_{1M}-g_{0,1M}$ et $G_{1M}$ est une teneur en gaz à 1MPa lorsque le matériau poreux est contenu, $G_{0,1M}$ est une teneur en gaz à 0,1 MPa lorsque le matériau poreux est contenu, $G_{1M}$ est une teneur en gaz à 1 MPa lorsque le matériau poreux n'est pas contenu, et $g_{0,1M}$ est une teneur en gaz à 0,1 MPa lorsque le matériau poreux n'est pas contenu.

**4.** Le réservoir de stockage de gaz (1) selon l'une des revendications 1 à 3, où le taux de remplissage F du matériau poreux dans le réservoir de gaz (300) est inférieur ou égal à 99%.

**5.** Le réservoir de stockage de gaz (1) selon l'une des revendications 1 à 4, où un matériau utilisé pour le boîtier (200) et un matériau utilisé pour le réservoir de gaz (300) sont différents l'un de l'autre.

**6.** Le réservoir de stockage de gaz (1) selon l'une des revendications 1 à 5, où le boîtier (200) est en plastique.

**7.** Le réservoir de stockage de gaz (1) selon l'une des revendications 1 à 6, où le réservoir de gaz (300) est en plastique renforcé de fibres.

**8.** Le réservoir de stockage de gaz (1) selon l'une des revendications 1 à 7, où un seul réservoir de gaz (300) est installé dans le boîtier (200).

**9.** Le réservoir de stockage de gaz (1) selon l'une des revendications 1 à 8, où le réservoir de gaz (300) comprend une seule sortie de gaz (32) exposée à l'extérieur du réservoir de stockage de gaz (1) à travers un trou prévu dans une surface latérale (30) du boîtier (200), et la sortie de gaz (32) est configurée pour servir également d'entrée de gaz.

**10.** Le réservoir de stockage de gaz (1) selon la revendication 9, où le boîtier (200) a un évidement (34) dans sa surface latérale (30) et la sortie de gaz (32) est prévue dans l'évidement (34).

**11.** Le réservoir de stockage de gaz (1) selon l'une des revendications 1 à 10, où une poignée (100) est prévue au niveau d'une partie de coin extérieur du boîtier (200).

**12.** Le réservoir de stockage de gaz (1) selon la revendication 11, dans lequel la poignée (100) est intégrée au boîtier (200) en prévoyant une partie creuse dans la partie du coin extérieur du boîtier (200).

**13.** Le réservoir de stockage de gaz (1) selon l'une des revendications 1 à 12, où le module de mesure de la quantité de gaz restante comprend un capteur de température.

**14.** Le réservoir de stockage de gaz (1) selon l'une des revendications 1 à 13, où le module de mesure de la quantité de gaz restante est configuré pour être capable de communiquer sans fil.

**15.** Le réservoir de stockage de gaz (1) selon l'une des revendications 1 à 14, où le module de mesure de la quantité de gaz restante est configuré pour effectuer une communication GPS.

FIG. 1

FIG. 2

FIG. 3

FIG. 4

FIG. 5

FIG. 6

FIG. 7

FIG. 8

FIG. 9

FIG. 10

1

FIG. 11

1

FIG. 12

1

7 0

FIG. 13

FIG. 14

FIG. 15

FIG. 16

FIG. 17

FIG. 18

FIG. 19

FIG. 20

**EP 3 663 631 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015178906 A
- US 2006051638 A1
- US 2009283176 A1

**Non-patent literature cited in the description**

- **YABING HE et al.** Methane Storage in Metal-Organic Frameworks. *Chem Soc Rev,* 2014
- *Chem. Sci,* 2014, vol. 5, 32-51
- *J. Am. Chem. Soc,* 2012, vol. 134, 15016-15021
- *Chem. Sci,* 2015, vol. 6, 1645-1649